# EUROPÄISCHE PATENTSCHRIFT

(11) **EP 4 054 391 B1**
(45) Veröffentlichungstag und Bekanntmachung des Hinweises auf die Patenterteilung: **07.05.2025**
(21) Anmeldenummer: 20800071.1
(22) Anmeldetag: 28.10.2020
(51) Int. Cl.: A47L 9/20, A47L 7/00, A47L 9/28

(54) **SAUGGERÄT MIT EINER FILTERREINIGUNGSVORRICHTUNG**
SUCTION APPARATUS HAVING A FILTER CLEANING DEVICE
ASPIRATEUR MUNI D'UN DISPOSITIF DE NETTOYAGE DE FILTRE

(30) Priorität: 08.11.2019 DE 102019217304
(43) Veröffentlichungstag der Anmeldung: 14.09.2022
(73) Patentinhaber: Robert Bosch GmbH, 70442 Stuttgart (DE)
(72) Erfinder: ROTHWEILER, Christian, 70771 Leinfelden-Echterdingen (DE); SCHLAUCH, Patrick, 73730 Esslingen (DE)
(86) Internationale Anmeldenummer: PCT/EP2020/080272
(87) Internationale Veröffentlichungsnummer: WO 2021/089379

(56) Entgegenhaltungen:
- EP-A2- 1 629 760
- WO-A1-2017/012215
- DE-C2- 3 790 084
- US-A- 4 099 940
- US-A1- 2004 025 285

## Beschreibung

Die vorliegende Erfindung betrifft ein Sauggerät mit einer Filterreinigungsvorrichtung nach dem Oberbegriff des Anspruchs 1.

### Stand der Technik

Aus der EP 1 839 550 A2 ist bereits ein Staubsauger mit einer Filterreinigung bekannt.

### Offenbarung der Erfindung

Die Erfindung geht aus von einem Sauggerät mit einem Sauggerätgehäuse, mit einem Filter zur Reinigung eines Saugstroms, insbesondere innerhalb des Sauggerätgehäuses, wobei das Sauggerätgehäuse zumindest ein Filterbefestigungselement zur zumindest mittelbaren Befestigung des Filters an dem Sauggerätgehäuse aufweist, und mit einer Filterreinigungsvorrichtung zur mechanischen Reinigung des Filters, wobei der Filter, das Filterbefestigungselement und die Filterreinigungsvorrichtung zumindest teilweise innerhalb des Sauggerätgehäuses angeordnet sind. Es wird vorgeschlagen, dass die Filterreinigungsvorrichtung eine, insbesondere manuell betätigbare, Betätigungsvorrichtung und eine Hammervorrichtung aufweist, wobei die Betätigungsvorrichtung und die Hammervorrichtung derart zusammenwirken, dass die Hammervorrichtung unter Verwendung der Betätigungsvorrichtung, insbesondere manuell, betätigbar ist und die Hammervorrichtung bei einer Betätigung zumindest einen Impuls auf das Filterbefestigungselement ausübt.

Die Erfindung stellt ein Sauggerät bereit, mit dem die Einsatzdauer des Sauggeräts erhöht werden kann, indem die Hammervorrichtung zumindest einen Impuls auf das Filterbefestigungselement ausübt.

Unter einem "Sauggerät" ist ein elektrisches Gerät zu verstehen, das dazu ausgebildet ist, einen Saugstrom zu erzeugen, um Staub- und/oder Schmutzpartikel und/oder Flüssigkeiten aufzusaugen. Beispielsweise kann das Sauggerät als ein Staubsauger ausgebildet sein.

In einer Ausführungsform handelt es sich bei dem Sauggerät um ein akkubetriebenes Sauggerät, welches mittels zumindest eines Akkus, insbesondere mittels eines Handwerkzeugmaschinenakkupacks, betreibbar ist. Hierdurch findet dann die Bereitstellung einer elektrischen Energie durch eine Energieversorgung des Sauggeräts mittels des zumindest einen Akkus statt. Im Rahmen der vorliegenden Erfindung soll unter einem "Handwerkzeugmaschinenakkupack" ein Zusammenschluss von zumindest einer Ackuzelle und einem Akkupackgehäuse verstanden werden. Der Handwerkzeugmaschinenakkupack ist vorteilhafter Weise zur Energieversorgung von handelsüblichen akkubetriebenen Handwerkzeugmaschinen ausgebildet.

Das Sauggerätgehäuse ist zumindest dazu vorgesehen, zumindest das Filterbefestigungselement und die Filterreinigungsvorrichtung aufzunehmen. Das Filterbefestigungselement und/oder die Filterreinigungsvorrichtung können an dem Sauggerätgehäuse angeordnet werden und mit dem Sauggerätgehäuse form-, kraft- und/oder stoffschlüssig verbunden werden. Das Sauggerätgehäuse kann einteilig, zweiteilig oder mehrteilig ausgeformt sein. So kann beispielsweise das Sauggerätgehäuse zumindest zwei Gehäuseteile umfassen, die nach Art eines Topfes mit einem Deckel oder nach Art einer Sonnen- und einer Schattenseite ausgebildet sind. Das Sauggerätgehäuse kann in einem Ausführungsbeispiel ein Gehäuseoberteil und einen Staubsammelbehälter umfassen. Hierbei können das Gehäuseoberteil und der Staubsammelbehälter lösbar miteinander verbindbar sein. Das Gehäuseoberteil kann dabei einen Elektromotor, eine Steuereinheit zur Steuerung des Sauggeräts und die Energieversorgung zur Versorgung des Sauggeräts mit elektrischer Energie aufweisen. Zudem kann das Sauggerätgehäuse zumindest eine Sauggerätachse aufweisen. Das Sauggerätgehäuse kann im Wesentlichen rotationssymmetrisch um die Sauggerätachse ausgebildet sein. Beispielhaft kann das Sauggerätgehäuse nach Art eines Zylinders, nach Art eines Kegels oder nach Art eines Kegelstumpfs ausgeformt sein.

Der Elektromotor kann das Sauggerät antreiben, sobald der Elektromotor mit elektrischer Energie der Energieversorgung versorgt wird. Wenn der Elektromotor mit elektrischer Energie versorgt ist, kann dieser zumindest einen Saugstrom im Wesentlichen durch das Sauggerätgehäuse erzeugen. Ein Saugstrom bezeichnet hierbei einen Luftzug im Wesentlichen durch das Sauggerätgehäuse über zumindest einen Sauggerätgehäuseeinlass und aus zumindest einem Sauggerätgehäuseauslass, wobei auch denkbar ist, dass der Saugstrom mittels einer Sogwirkung im Wesentlichen durch das Sauggerätgehäuse erzeugt werden kann. Durch Erzeugen des Saugstroms können Partikel und/oder Flüssigkeiten, beispielsweise über einen Saugschlauch des Sauggeräts, an- und/oder eingesaugt werden. Ein Saugschlauch weist zumindest eine Saugöffnung auf und ist vorzugsweise lösbar am Sauggerätgehäuse anbringbar. Die Saugöffnung ist dazu ausgebildet, mittels des Saugstroms anfallende Partikel während eines Betriebs des Sauggeräts aufzunehmen.

Der Filter ist dazu ausgebildet, den Saugstrom von Stoff- und/oder Fluidpartikeln zu filtern und derart den Saugstrom zu reinigen. Der Filter kann innerhalb des Sauggerätgehäuses angeordnet sein. In der oben beschriebenen beispielhaften zweiteiligen Realisierung des Sauggerätgehäuses kann der Filter an dem Gehäuseoberteil angeordnet sein und in den Staubsammelbehälter ragen.

Das Sauggerätgehäuse weist das Filterbefestigungselement zur zumindest mittelbaren Befestigung des Filters an dem Sauggerätgehäuse auf. Hierdurch kann der Filter, insbesondere lösbar, mit dem Sauggerätgehäuse zumindest mittelbar verbunden werden. Die zumindest mittelbare Verbindung des Filters mit dem Sauggerätgehäuse kann beispielsweise eine Schraubverbindung, eine Klemmverbindung, eine Schnappverbindung, eine Hakenverbindung oder eine Bajonettverbindung sein. Beispielhaft kann durch die Bajonettverbindung sowohl eine einfach zu bedienende als auch sichere zumindest mittelbare Verbindung des Filters mit dem Sauggerätgehäuse realisiert werden. In der oben beschriebenen beispielhaften zweiteiligen Realisierung des Sauggerätgehäuses kann das Filterbefestigungselement den Filter am Gehäuseoberteil derart anordnen, dass der Filter in den Staubsammelbehälter hineinragt. Das Filterbefestigungselement kann beispielhaft als ein Filterbefestigungsring, eine Filterbefestigungsnut, eine Filterbefestigungsschiene, eine Filterbefestigungskante, ein Filterbefestigungshaken, ein T-förmiges Filterbefestigungsprofil, eine Filterbefestigungsschale, einen Filterbefestigungstopf oder dergleichen ausgeformt sein.

Die Filterreinigungsvorrichtung ist dazu ausgebildet, den Filter mechanisch zu reinigen. Hierbei soll "mechanische Reinigung" als eine Reinigung des Filters im Wesentlichen ohne Verwendung von elektrischer Energie der Energieversorgung und ohne Verwendung von Chemikalien verstanden werden. Durch Ausüben eines Impulses auf das Filterbefestigungselement kann zumindest eine Erschütterung in Form von Körperschall in das Sauggerätgehäuse eingeleitet werden. Die zumindest eine Erschütterung kann dann über das Filterbefestigungselement auf den Filter übermittelt werden, sodass Staub- und/oder Schmutzpartikel aufgrund der zumindest einen Erschütterung von dem Filter gelöst werden können. Die Filterreinigungsvorrichtung reinigt den Filter im Wesentlichen von Staub- und/oder Schmutzpartikeln sowie von Flüssigkeiten, die sich im und/oder am Filter während dessen Verwendung abgelagert haben. Die Filterreinigungsvorrichtung ist zumindest teilweise innerhalb des Sauggerätgehäuses angeordnet. In der oben beschriebenen beispielhaften zweiteiligen Realisierung des Sauggerätgehäuses kann die Filterreinigungsvorrichtung an dem Gehäuseoberteil und/oder an dem Staubsammelbehälter angeordnet sein. Zudem kann die Filterreinigungsvorrichtung mit dem Gehäuseoberteil oder dem Staubsammelbehälter verbunden sein.

Die Filterreinigungsvorrichtung weist die, insbesondere manuell betätigbare, Betätigungsvorrichtung und die Hammervorrichtung auf. In der oben beschriebenen beispielhaften zweiteiligen Realisierung des Sauggerätgehäuses kann die Betätigungsvorrichtung und/oder die Hammervorrichtung an dem Gehäuseoberteil und/oder dem Staubsammelbehälter angeordnet sein. In diesem Ausführungsbeispiel ist auch denkbar, dass die Betätigungsvorrichtung und/oder die Hammervorrichtung innerhalb des Gehäuseoberteils und/oder des Staubsammelbehälters angeordnet ist. Die Betätigungsvorrichtung ist derart ausgebildet, dass sie von einem Benutzer manuell betätigt werden kann. Im Rahmen der vorliegenden Erfindung soll "manuell betätigbar" als eine, insbesondere mechanische, Betätigung im Wesentlichen ohne Verwendung von elektrischer Energie der Energieversorgung verstanden werden. Hierbei kann die Betätigung der Betätigungsvorrichtung durch den Benutzer beispielhaft ein Drücken, ein Schieben, ein Ziehen oder ein Drehen der Betätigungsvorrichtung sein.

Die Betätigungsvorrichtung wirkt mit der Hammervorrichtung derart zusammen, dass, sobald der Benutzer die Betätigungsvorrichtung betätigt, die Betätigungsvorrichtung die Hammervorrichtung betätigt.

Die Betätigungsvorrichtung ist derart ausgebildet, dass sie die Hammervorrichtung, insbesondere manuell, betätigt, sobald der Benutzer die Betätigungsvorrichtung betätigt. Wie oben beschrieben, soll auch hier "manuell betätigen" als eine, insbesondere mechanische, Betätigung im Wesentlichen ohne Verwendung von elektrischer Energie verstanden werden. Die Betätigungsvorrichtung kann hierbei beispielhaft die Hammervorrichtung drücken, stoßen, schieben, kippen, schwenken, drehen oder ziehen. Das Betätigen der Hammervorrichtung mittels der Betätigungsvorrichtung kann als eine Art "Aktivieren" oder "Vorspannen" und anschließendes "Auslösen" verstanden werden. Sobald die Betätigungsvorrichtung die Hammervorrichtung betätigt hat, kann die Hammervorrichtung somit den Impuls auf das Filterbefestigungselement ausüben. In der oben genannten beispielhaften Ausführungsform des Sauggeräts mit einer Sauggerätachse kann die Hammervorrichtung den Impuls axial zur Sauggerätachse, radial zur Sauggerätachse oder quer zur Sauggerätachse auf das Filterbefestigungselement ausüben. Hierbei soll "axial zur Sauggerätachse" als parallel zur Sauggerätachse verstanden werden. "Radial zur Sauggerätachse" soll als senkrecht zur Sauggerätachse verstanden werden. "Quer zur Sauggerätachse" soll als schräg, zumindest einen Winkel im Bereich von 1° bis 89° einschließend, verstanden werden. Zudem kann die Hammervorrichtung den Impuls direkt oder indirekt auf das Filterbefestigungselement ausüben. "Direkt" soll hier als unmittelbar auf das Filterbefestigungselement ausübend verstanden werden. "Indirekt" soll hier als mittelbar, über zumindest ein weiteres Bauteil oder Element, auf das Filterbefestigungselement ausübend verstanden werden. Die Hammervorrichtung kann beispielhaft den Impuls in Form von Körperschall auf den Filter über das Filterbefestigungselement ausüben. Hierzu kann der Körperschall über das Sauggerätgehäuse, insbesondere das Gehäuseoberteil, von der Hammervorrichtung zum Filterbefestigungselement übermittelt werden.

Durch betätigen der Betätigungsvorrichtung wird somit die Hammervorrichtung mechanisch derart aktiviert und ausgelöst, dass die Hammervorrichtung einen Impuls auf den Filter ausübt. In Folge des Impulses auf den Filter wird dieser von darin und/oder daran angesammelten Staub- und/oder Schmutzpartikeln befreit. Aufgrund des Impulses können sich die Staub- und/oder Schmutzpartikel von dem Filter lösen und beispielsweise in den Staubsammelbehälter fallen.

Das Sauggerätgehäuse weist zumindest einen Deckel, insbesondere einen Deckel eines Energieversorgungskoppelmittels, auf, wobei der Deckel von einer ersten Position des Deckels in eine zweite Position des Deckels um eine Deckelschwenkachse schwenkbar ist und der Deckel bei einer Bewegung von der ersten Position des Deckels in die zweite Position des Deckels die Filterreinigungsvorrichtung, insbesondere die Betätigungsvorrichtung, betätigt. Der Deckel des Sauggerätgehäuses kann zumindest formschlüssig mit dem Sauggerätgehäuse abschließen. Der Deckel des Sauggerätgehäuses ist dazu ausgebildet, zumindest einen Teil des Sauggerätgehäuses zumindest teilweise zu verschließen. In der oben beschriebenen beispielhaften zweiteiligen Realisierung des Sauggerätgehäuses kann der Deckel des Sauggerätgehäuses zumindest einen Teil des Gehäuseoberteils und/oder des Staubsammelbehälters verschließen. Der Deckel des Sauggerätgehäuses kann dabei das Sauggerätgehäuse derart verschließen, dass Staub- und/oder Schmutzpartikel und/oder Flüssigkeiten vor einem Eindringen in das Sauggerätgehäuse gehindert, insbesondere vermieden, werden. Der Deckel des Sauggerätgehäuses kann beispielhaft nach Art einer Klappe, einer Schale, einer Halbschale oder eines Topfes ausgeformt sein.

Der Deckel ist von der ersten Position des Deckels in die zweite Position des Deckels um die Deckelschwenkachse schwenkbar. Die erste Position des Deckels kann hierbei eine geöffnete Position des Deckels sein, in der zumindest ein Teil des Sauggerätgehäuses geöffnet sein kann. Die zweite Position des Deckels kann eine geschlossene Position sein, in der der Deckel, insbesondere formschlüssig, mit dem Sauggerätgehäuse, insbesondere dem Gehäuseoberteil, abschließt. In der oben genannten beispielhaften Ausführungsform des Sauggeräts mit einer Sauggerätachse kann die Deckelschwenkachse hier quer, insbesondere senkrecht, zur Sauggerätachse angeordnet sein, sodass sich die Sauggerätachse und die Deckelschwenkachse in zumindest einem Punkt schneiden. Hierbei ist es auch denkbar, dass die Deckelschwenkachse und die Sauggerätachse im Wesentlichen parallel oder windschief zueinander sind. "Im Wesentlichen parallel" soll hier derart verstanden werden, dass ein Winkel im Bereich von 1° bis 10° zwischen der Deckelschwenkachse und der Sauggerätachse vorhanden sein kann. Das Sauggerätgehäuse, insbesondere das Gehäuseoberteil, kann eine Aufnahme zur Aufnahme der Deckelschwenkachse aufweisen. Mit Hilfe der Aufnahme der Deckelschwenkachse kann der Deckel schwenkbar gelagert werden.

Im Rahmen der vorliegenden Erfindung soll "schwenken" als eine zumindest teilweise Drehung des Deckels des Sauggerätgehäuses um die Deckelschwenkachse verstanden werden, wobei die Deckelschwenkachse dezentral, insbesondere endseitig, an dem Deckel des Sauggerätgehäuses ausgebildet ist. Der Deckel kann um die Deckelschwenkachse von der ersten, insbesondere geöffneten, Position des Deckels in die zweite, insbesondere geschlossene, Position des Deckels durch den Benutzer geschwenkt werden.

Bei der Bewegung, insbesondere Schwenkbewegung, des Deckels des Sauggerätgehäuses um die Deckelschwenkachse von der ersten Position des Deckels in die zweite Position des Deckels wird die Filterreinigungsvorrichtung, insbesondere die Betätigungsvorrichtung, betätigt. Hierzu kann der Deckel form-, kraft- und/oder stoffschlüssig mit der Filterreinigungsvorrichtung verbunden sein, um die Schwenkbewegung in die Betätigung der Filterreinigungsvorrichtung umzuwandeln. Es ist auch denkbar, dass der Deckel bei der Bewegung, insbesondere Schwenkbewegung, von der zweiten Position des Deckels in die erste Position des Deckels die Filterreinigungsvorrichtung betätigt.

Der Deckel und/oder die Filterreinigungsvorrichtung kann zumindest ein Federelement aufweisen, das dazu ausgebildet ist, den Deckel von der zweiten Position des Deckels in die erste Position des Deckels zu bewegen, insbesondere zu schwenken. Das Federelement kann hierbei in Umfangsrichtung um die Deckelschwenkachse angeordnet sein. Das Federelement kann beispielhaft als eine Feder, eine Spiralfeder oder als eine Blattfeder ausgeformt sein.

Der Deckel kann der Deckel eines Energieversorgungskoppelmittels sein. Das Energieversorgungskoppelmittel ist dazu ausgebildet, den Akku, insbesondere den Handwerkzeugmaschinenakkupack, aufzunehmen und mit der Energieversorgung mechanisch und elektrisch zu verbinden. Das Energieversorgungskoppelmittel ist am Sauggerätgehäuse, insbesondere am Gehäuseoberteil, angeordnet und mit diesem verbunden. Der Deckel des Energieversorgungskoppelmittels ist dazu ausgebildet, das Energieversorgungskoppelmittel abzudecken, insbesondere zu verschließen, um ein Eindringen von Staub- und/oder Schmutzpartikel und/oder Flüssigkeit zum Energieversorgungskoppelmittel zu vermeiden, insbesondere zu verhindern. Der Deckel des Energieversorgungskoppelmittels kann beispielhaft als eine Klappe, eine Schale, eine Halbschale oder ein Topf ausgebildet sein.

In einer Ausführungsform des Sauggeräts weist der Deckel zumindest ein Aufnahmeelement auf und die Betätigungsvorrichtung umfasst zumindest ein Verbindungselement und/oder der Deckel weist zumindest ein Verbindungselement auf und die Betätigungsvorrichtung umfasst zumindest ein Aufnahmeelement, wobei das Aufnahmeelement mit dem Verbindungselement, insbesondere starr, verbindbar oder verbunden ist. Das Aufnahmeelement kann das Verbindungselement aufnehmen. Hierbei kann das Aufnahmeelement zumindest eine form-, kraft- und/oder stoffschlüssige Verbindung mit dem Verbindungselement ermöglichen. Die form-, kraft- und/oder stoffschlüssige Verbindung von dem Verbindungselement mit dem Aufnahmeelement ermöglicht, dass die Bewegung, insbesondere die Schwenkbewegung, von dem Deckel auf die Betätigungsvorrichtung übermittelt oder übertragen werden kann. Die form-, kraft- und/oder stoffschlüssige Verbindung von dem Aufnahmeelement mit dem Verbindungselement kann beispielsweise als eine Hakenverbindung, eine Nut-und-Federverbindung, eine Schnappverbindung, eine Bajonettverbindung, eine Rastverbindung oder eine Schraubverbindung mittels zumindest eines Befestigungselements wie einer Schraube, ausgebildet sein. Der Deckel und die Betätigungsvorrichtung können derart starr miteinander verbunden sein, dass der Deckel eine Hebelwirkung auf die Betätigungsvorrichtung übertragen kann.

Das Aufnahmeelement kann als eine Aufnahme ausgeformt sein. Dabei kann die Aufnahme beispielsweise als eine Öffnung, eine Aussparung oder nach Art einer Schale oder eines Topfes ausgeformt sein. Das Verbindungselement kann beispielhaft als ein Zapfen, ein Stift, ein Haken, ein Steg, eine Kante oder ein Bolzen ausgebildet sein.

In einer Ausführungsform des Sauggeräts weist die Betätigungsvorrichtung zumindest ein Betätigungselement auf, wobei das Betätigungselement um eine Betätigungsachse von einer ersten Position der Betätigungsvorrichtung in eine zweite Position der Betätigungsvorrichtung schwenkbar gelagert ist, und das Betätigungselement beim Schwenken die Hammervorrichtung betätigt. Das Betätigungselement ist dazu ausgebildet, die Hammervorrichtung zu betätigen. In der oben genannten beispielhaften Ausführungsform des Sauggeräts mit einer Sauggerätachse kann die Betätigungsachse quer, insbesondere senkrecht, zur Sauggerätachse angeordnet sein. Weiter kann die Betätigungsachse im Wesentlichen parallel zur Deckelschwenkachse sein. Bevorzugt können die Deckelschwenkachse und die Betätigungsachse koaxial zueinander sein. Das Sauggerätgehäuse, insbesondere das Gehäuseoberteil, kann eine Aufnahme zur Aufnahme der Betätigungsachse aufweisen. Mit Hilfe der Aufnahme der Betätigungsachse kann das Betätigungselement schwenkbar gelagert werden.

In der ersten Position der Betätigungsvorrichtung kann das Betätigungselement an der Hammervorrichtung anliegen oder aber im Wesentlichen keine Verbindung mit der Hammervorrichtung aufweisen. Bei der Schwenkbewegung des Betätigungselements von der ersten Position der Betätigungsvorrichtung in die zweite Position der Betätigungsvorrichtung betätigt das Betätigungselement die Hammervorrichtung. Dabei liegt das Betätigungselement an der Hammervorrichtung an und schwenkt die Hammervorrichtung. In der zweiten Position der Betätigungsvorrichtung kann das Betätigungselement an der Hammervorrichtung anliegen oder aber einen Abstand zur Hammervorrichtung aufweisen.

Es ist denkbar, dass wenn die Betätigungsvorrichtung in ihrer ersten Position ist, der Deckel in seiner ersten Position ist. Zudem ist denkbar, dass wenn die Betätigungsvorrichtung in der zweiten Position ist, der Deckel in seiner zweiten Position ist. Hierdurch ist es denkbar, dass wenn der Deckel von der ersten Position des Deckels in die zweite Position des Deckels geschwenkt wird, die Betätigungsvorrichtung von der ersten Position der Betätigungsvorrichtung in die zweite Position der Betätigungsvorrichtung geschwenkt wird.

Es ist möglich, dass das Betätigungselement die Hammervorrichtung beim Schwenken von der zweiten Position der Betätigungsvorrichtung in die erste Position der Betätigungsvorrichtung betätigt. In der oben genannten beispielhaften Ausführungsform des Sauggeräts mit einer Sauggerätachse ist zudem denkbar, dass die Betätigungsachse im Wesentlichen parallel oder windschief zur Sauggerätachse angeordnet ist.

Das Betätigungselement kann beispielhaft nach Art eines Stifts, eines Stegs, eines Blatts, einer Stange, eines Hakens, eines Zapfens, einer Rolle, einer Feder oder einer Nase ausgeformt sein. Das Betätigungselement kann einstückig mit dem Aufnahmeelement oder dem Verbindungselement sein.

In einer Ausführungsform des Sauggeräts weist die Betätigungsvorrichtung zumindest ein Schwenkelement auf und das Betätigungselement umfasst zumindest ein Führungselement, wobei das Führungselement dazu ausgebildet ist, das Schwenkelement beim Schwenken von einer ersten Position des Schwenkelements in eine zweite Position des Schwenkelements zu führen, insbesondere ausgerichtet zu halten, wobei das Schwenkelement unter Verwendung des Betätigungselements die Hammervorrichtung betätigt. Das Schwenkelement ist derart ausgebildet, dass es um die Betätigungsachse schwenkbar gelagert ist. Das Schwenkelement ist an dem Betätigungselement angeordnet. In der ersten Position des Schwenkelements kann das Schwenkelement im Wesentlichen parallel zu dem Betätigungselement und/oder dem Führungselement sein. Zudem kann das Schwenkelement in der ersten Position des Schwenkelements an der Hammervorrichtung anliegen oder aber einen Abstand zur Hammervorrichtung aufweisen. Wenn das Schwenkelement unter Verwendung des Führungselements von der ersten Position des Schwenkelements in die zweite Position des Schwenkelements geschwenkt wird, betätigt das Schwenkelement die Hammervorrichtung. In der zweiten Position des Schwenkelements kann das Schwenkelement an der Hammervorrichtung anliegen oder aber einen Abstand zur Hammervorrichtung aufweisen. Zudem kann in der zweiten Position des Schwenkelements das Schwenkelement im Wesentlichen parallel zum Betätigungselement und/oder zum Führungselement sein. Das Führungselement kann das Schwenkelement bezüglich der Betätigungsachse bei der Schwenkbewegung ausgerichtet halten.

Das Führungselement kann mit dem Betätigungselement form-, kraft- und/oder stoffschlüssig verbunden sein. Es ist auch möglich, dass das Führungselement und das Betätigungselement einstückig sind. Das Führungselement ist derart ausgebildet, dass es das Schwenkelement beim Schwenken von der ersten Position des Schwenkelements in die zweite Position des Schwenkelements führt. Hierzu liegt das Schwenkelement zumindest abschnittsweise an dem Führungselement an. Sobald das Betätigungselement geschwenkt wird, kann das Führungselement geschwenkt werden.

Das Schwenkelement kann derart an dem Betätigungselement angeordnet sein, dass, wenn das Betätigungselement in der ersten Position der Betätigungsvorrichtung ist, das Schwenkelement in der ersten Position des Schwenkelements sein kann. Weiter kann das Schwenkelement in der zweiten Position des Schwenkelements sein, wenn das Betätigungselement in der zweiten Position der Betätigungsvorrichtung ist.

Es ist auch denkbar, dass das Führungselement das Schwenkelement von der zweiten Position des Schwenkelements in die erste Position des Schwenkelements führt und dabei die Hammervorrichtung betätigt.

Das Schwenkelement kann beispielhaft nach Art eines Zylinders, eines Würfels, eines Quaders, einer Kugel mit einem Steg, einer Rolle oder dergleichen ausgebildet sein. Hierbei kann das Schwenkelement beispielsweise eine U-förmige, eine V-förmige, eine L-förmige, eine T-förmige oder eine I-förmige Form aufweisen. Das Führungselement kann beispielsweise als eine Führungsbahn, eine Führungsfläche, ein Führungssteg, eine Führungskulisse oder eine Führungsnut ausgebildet sein.

In einer Ausführungsform sind das Betätigungselement, das Führungselement und das Verbindungselement der Betätigungsvorrichtung einstückig ausgebildet. In einer alternativen Ausführungsform sind das Betätigungselement, das Führungselement und das Aufnahmeelement der Betätigungsvorrichtung einstückig ausgebildet.

In einer Ausführungsform des Sauggeräts ist das Schwenkelement über zumindest ein Betätigungsgelenk mit dem Betätigungselement verbunden. Ein Betätigungsgelenk ist hierbei eine bewegliche Verbindung des Schwenkelements mit dem Betätigungselement. Das Betätigungselement kann zumindest eine erste Aufnahme und eine zweite Aufnahme aufweisen. Die erste Aufnahme des Betätigungselements kann als eine Aufnahme für einen Stift ausgebildet sein. Hierbei kann die erste Aufnahme des Betätigungselements als zumindest eine Durchgangsöffnung ausgeformt sein. Es ist denkbar, dass die erste Aufnahme des Betätigungselements als zumindest ein Stift ausgebildet ist, wobei der Stift das Schwenkelement zumindest teilweise aufnimmt. Die zweite Aufnahme des Betätigungselements kann das Schwenkelement zumindest abschnittsweise aufnehmen, indem das zweite Aufnahmeelement des Betätigungselements in das Schwenkelement eingreift.

Das Schwenkelement kann zumindest eine erste Aufnahme und eine zweite Aufnahme aufweisen. Die erste Aufnahme des Schwenkelements kann als zumindest eine Aufnahme für einen Stift ausgebildet sein. Beispielhaft kann die erste Aufnahme des Schwenkelements als zumindest eine Durchgangsöffnung ausgeformt sein. Die zweite Aufnahme des Schwenkelements kann als eine Aussparung ausgebildet sein, wobei die Aussparung die zweite Aufnahme des Betätigungselements zumindest teilweise aufnehmen kann.

Das Betätigungsgelenk ist dazu ausgebildet, das Schwenkelement schwenkbar zum Betätigungselement zu lagern. Die erste Aufnahme des Betätigungselements, die erste Aufnahme des Schwenkelements und zumindest ein Stift bilden das Betätigungsgelenk aus. Hierbei kann der Stift die erste Aufnahme des Betätigungselements und die erste Aufnahme des Schwenkelements miteinander verbinden.

In einer Ausführungsform des Sauggeräts weist das Schwenkelement zumindest ein Rückführelement auf, wobei das Rückführelement dazu ausgebildet ist, das Schwenkelement von einer zweiten Relativposition des Schwenkelements in eine erste Relativposition des Schwenkelements zurückzuführen. Das Rückführelement kann form-, kraft- und/oder stoffschlüssig mit dem Schwenkelement verbunden sein. Es ist denkbar, dass das Rückführelement einstückig mit dem Schwenkelement ist. Das Schwenkelement kann eine Aufnahme für das Rückführelement aufweisen, wobei die Aufnahme für das Rückführelement als eine Durchgangsöffnung ausgeformt sein kann. Das Rückführelement kann in Form eines Stabs, eines Stifts, einer Rolle, eines Blatts, eines Würfels, eines Quaders, eines Prismas oder dergleichen ausgeformt sein oder aber in Form eines Federelements, wie beispielsweise eine Feder, eine Spiralfeder oder eine Blattfeder. Das Rückführelement kann eine Masse aufweisen, um mittels einer Gewichtskraft der Masse des Rückführelements das Schwenkelement von der zweiten Relativposition des Schwenkelements in die erste Relativposition des Schwenkelements zurückzuführen.

Die erste Relativposition des Schwenkelements kennzeichnet eine im Wesentlichen parallele Anordnung des Schwenkelements relativ zum Betätigungselement. Die zweite Relativposition des Schwenkelements kennzeichnet eine winklige Anordnung des Schwenkelements zum Betätigungselement. Dabei kann das Schwenkelement einen Winkel im Bereich von 1° bis 179° zum Betätigungselement einschließen.

Wenn das Schwenkelement von der ersten Position des Schwenkelements in die zweite Position des Schwenkelements geschwenkt wird, wird das Schwenkelement durch das Führungselement in der ersten Relativposition des Schwenkelements ausgerichtet gehalten. Sobald das Schwenkelement von der zweiten Position des Schwenkelements in die erste Position des Schwenkelements geschwenkt wird, kann das Schwenkelement in der zweiten Relativposition angeordnet sein. Wenn das Schwenkelement in der zweiten Relativposition des Schwenkelements angeordnet ist, ermöglicht das Rückführelement, dass das Schwenkelement in die erste Relativposition zurückgeführt wird. Wenn sich das Schwenkelement in der ersten Relativposition des Schwenkelements befindet, kann ermöglicht werden, dass das Schwenkelement zuverlässig die Hammervorrichtung betätigt, wenn die Betätigungsvorrichtung von der ersten Position der Betätigungsvorrichtung in die zweite Position der Betätigungsvorrichtung geschwenkt wird. Das Rückführelement ermöglicht daher, dass die Betätigungsvorrichtung erneut die Hammervorrichtung betätigen kann.

Es ist auch denkbar, dass das Rückführelement das Schwenkelement von der zweiten Relativposition des Schwenkelements in die erste Relativposition des Schwenkelements zurückführt, wenn das Schwenkelement die Hammervorrichtung bei der Schwenkbewegung von der zweiten Position des Schwenkelements in die erste Position des Schwenkelements betätigt.

In einer Ausführungsform des Sauggeräts weist die Hammervorrichtung zumindest ein Führungselement auf, wobei das Führungselement der Hammervorrichtung mit der Betätigungsvorrichtung derart zusammenwirkt, dass das Führungselement unter Verwendung der Betätigungsvorrichtung die Hammervorrichtung von einer ersten Position der Hammervorrichtung in eine zweite Position der Hammervorrichtung um eine Hammervorrichtungsachse schwenkt. Dabei gleitet das Betätigungselement und/oder das Schwenkelement über das Führungselement der Hammervorrichtung und übt über das Führungselement der Hammervorrichtung einen Druck auf die Hammervorrichtung aus. Das Führungselement kann form-, kraft- und/oder stoffschlüssig mit der Hammervorrichtung verbunden sein. Es ist auch denkbar, dass das Führungselement der Hammervorrichtung einstückig mit der Hammervorrichtung ist. Das Führungselement kann beispielhaft als eine Führungsbahn, eine Führungsfläche, eine Führungsnut, ein Führungssteg oder als eine Führungskulisse ausgeformt sein. Das Führungselement der Hammervorrichtung kann die Betätigungsvorrichtung, insbesondere das Betätigungselement oder das Schwenkelement, zumindest teilweise aufnehmen. Dabei kann das Führungselement der Hammervorrichtung die Betätigungsvorrichtung derart aufnehmen, dass das Führungselement der Hammervorrichtung die Betätigung durch die Betätigungsvorrichtung auf die Hammervorrichtung überträgt. Hierdurch kann die Schwenkbewegung der Betätigungsvorrichtung, insbesondere des Betätigungselements oder des Schwenkelements, von der ersten Position der Betätigungsvorrichtung in die zweite Position der Betätigungsvorrichtung übertragen werden. Das Führungselement kann die Betätigungsvorrichtung, insbesondere das Betätigungselement und/oder das Schwenkelement, führen, um die Hammervorrichtung von der ersten Position der Hammervorrichtung in die zweite Position der Hammervorrichtung zu führen.

In der ersten Position der Hammervorrichtung kann die Hammervorrichtung an dem Sauggerätgehäuse, insbesondere an dem Gehäuseoberteil, und/oder an dem Filterbefestigungselement anliegen. In der zweiten Position der Hammervorrichtung kann die Hammervorrichtung einen Abstand zum Sauggerätgehäuse, insbesondere dem Gehäuseoberteil, und/oder dem Filterbefestigungselement aufweisen. Sobald die Betätigungsvorrichtung von der ersten Position der Betätigungsvorrichtung in die zweite Position der Betätigungsvorrichtung betätigt wird, wird die Hammervorrichtung unter Verwendung des Betätigungselements und/oder Schwenkelements und dem Führungselement der Hammervorrichtung von der ersten Position der Hammervorrichtung in die zweite Position der Hammervorrichtung geschwenkt. Es ist auch denkbar, dass die Betätigungsvorrichtung die Hammervorrichtung von der zweiten Position der Hammervorrichtung in die erste Position der Hammervorrichtung betätigt.

Die Hammervorrichtungsachse kann quer, insbesondere senkrecht, zu der Sauggerätachse, der oben beschriebenen beispielhaften zweiteiligen Realisierung des Sauggerätgehäuses, angeordnet sein. Es ist denkbar, dass die Hammervorrichtungsachse windschief oder im Wesentlichen parallel zur Sauggerätachse ausgebildet ist. Weiter kann die Hammervorrichtungsachse im Wesentlichen parallel zur Betätigungsachse sein. Das Sauggerätgehäuse, insbesondere das Gehäuseoberteil, kann eine Aufnahme zur Aufnahme der Hammervorrichtungsachse aufweisen. Mit Hilfe der Aufnahme der Hammervorrichtungsachse kann die Hammervorrichtung schwenkbar gelagert werden.

In einer Ausführungsform des Sauggeräts weist die Hammervorrichtung zumindest ein Rückführelement auf, wobei das Rückführelement zumindest abschnittsweise zwischen der Hammervorrichtung und dem Sauggerätgehäuse angeordnet ist und das Rückführelement die Hammervorrichtung um die Hammervorrichtungsachse aus der zweiten Position der Hammervorrichtung in die erste Position der Hammervorrichtung zurückführt. Das Rückführelement kann an der Hammervorrichtung und/oder an dem Sauggerätgehäuse, insbesondere dem Gehäuseoberteil, anliegen. Dabei kann das Rückführelement eine form-, kraft- und/oder stoffschlüssige Verbindung mit zumindest einem Element der Hammervorrichtung und/oder dem Sauggerätgehäuse, insbesondere dem Gehäuseoberteil, ausbilden. Das Rückführelement der Hammervorrichtung kann als zumindest eine Masse, ein elastisches Element und/oder ein Federelement ausgebildet sein. Das Rückführelement der Hammervorrichtung als die Masse kann mittels einer Gewichtskraft die Hammervorrichtung von der zweiten Position der Hammervorrichtung in die erste Position der Hammervorrichtung zurückführen. Das Rückführelement der Hammervorrichtung als die Masse kann beispielhaft in Form eines Stabs, eines Stifts, eines Würfels, eines Quaders, eines Prismas oder dergleichen ausgeformt sein. Das Rückführelement der Hammervorrichtung als das elastische Element kann beispielhaft als ein Gummipuffer ausgeformt sein. Das Rückführelement der Hammervorrichtung als das Federelement kann beispielhaft als eine Feder, eine Spiralfeder oder als eine Blattfeder ausgebildet sein.

Es ist denkbar, dass das Rückführelement der Hammervorrichtung die Hammervorrichtung von der ersten Position der Hammervorrichtung in die zweite Position der Hammervorrichtung zurückführt.

In einer Ausführungsform des Sauggeräts weist die Hammervorrichtung zumindest ein Hammerelement auf, das dazu ausgebildet ist, beim Schwenken der Hammervorrichtung um die Hammervorrichtungsachse aus der zweiten Position der Hammervorrichtung in die erste Position der Hammervorrichtung den Impuls auf das Filterbefestigungselement zu übertragen. Das Hammerelement kann form-, kraft- und/oder stoffschlüssig mit der Hammervorrichtung verbunden sein. Das Hammerelement kann in der ersten Position der Hammervorrichtung an der oben genannten beispielhaften Ausführungsform des Sauggeräts, insbesondere an dem Gehäuseoberteil, und/oder an dem Filterbefestigungselement anliegen. In der zweiten Position der Hammervorrichtung kann das Hammerelement einen Abstand zum Sauggerätgehäuse, insbesondere Gehäuseoberteil, und/oder Filterbefestigungselement aufweisen. Das Hammerelement kann in Form einer Masse ausgebildet sein. Das Hammerelement als die Masse kann in Form eines Würfels, eines Quaders, eines Stifts, eines Stabes, eines Zylinders, eines Kegels, eines Kegelstumpfs, einer Pyramide, eines Pyramidenstumpfs oder dergleichen ausgebildet sein.

Beim Schwenken der Hammervorrichtung aus der zweiten Position der Hammervorrichtung in die erste Position der Hammervorrichtung kann das Hammerelement den Impuls unter Verwendung des Rückführelements der Hammervorrichtung auf das Filterbefestigungselement übertragen. Hierzu kann das Hammerelement eine, insbesondere mechanische, Energie in den Impuls umwandeln, wobei die, insbesondere mechanische Energie, durch das Rückführelement bereitgestellt werden kann. Das Hammerelement kann den Impuls auf das Filterbefestigungselement in axialer und/oder radialer Richtung zur Sauggerätachse auf das Filterbefestigungselement übertragen.

In einer Ausführungsform weist die Hammervorrichtung ein Hammergehäuse auf, wobei das Hammergehäuse zumindest die Hammervorrichtungsachse, das Führungselement der Hammervorrichtung, die Aufnahme für das Rückführelement der Hammervorrichtung und das Hammerelement aufnimmt. Hierbei können das Hammergehäuse, das Führungselement der Hammervorrichtung und die Aufnahme für das Rückführelement der Hammervorrichtung einstückig ausgebildet sein. Das Hammergehäuse kann eine Aufnahme für das Hammerelement aufweisen, wobei das Hammergehäuse und das Hammerelement form-, kraft- und/oder stoffschlüssig miteinander verbunden sein können.

### Kurze Beschreibung der Zeichnungen

Die Erfindung wird nachfolgend anhand von einer bevorzugten Ausführungsform erläutert. Die Zeichnungen im Folgenden zeigen:
Fig. 1 eine schematische Ansicht eines erfindungsgemäßen Sauggeräts;
Fig. 2 eine perspektivische Ansicht einer Grundplatte des Gehäuseoberteils mit einer Filterreinigungsvorrichtung;
Fig. 3 eine perspektivische Ansicht der Filterreinigungsvorrichtung;

### Beschreibung des Ausführungsbeispiels

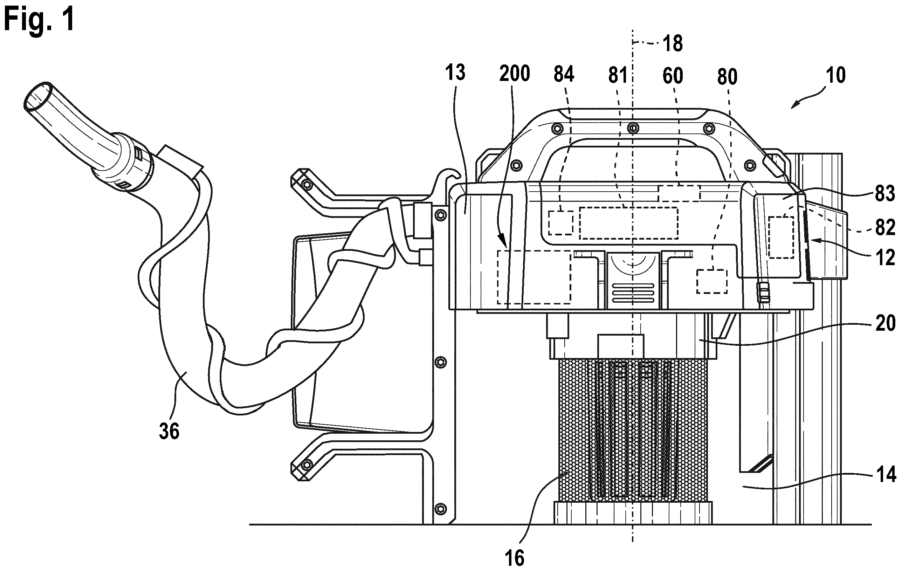

Fig. 1 zeigt ein erfindungsgemäßes Sauggerät 10 mit einem Sauggerätgehäuse 12, mit einem Filter 16, mit einem Filterbefestigungselement 20, mit einer Filterreinigungsvorrichtung 200 und mit einem Saugschlauch 36. Hier umfasst das Sauggerätgehäuse 12 ein Gehäuseoberteil 13 und einen Staubsammelbehälter 14 als ein Gehäuseunterteil. In dieser Ausgestaltung der Erfindung ist der Saugschlauch 36 reversibel lösbar an dem Sauggerätgehäuse 12 anbringbar.

In diesem Ausführungsbeispiel ist das Sauggerät 10 als ein akkubetriebenes Sauggerät ausgebildet, welches mittels zumindest eines Akkus 82, insbesondere mittels eines Handwerkzeugmaschinenakkupacks, betrieben wird. Somit wird die benötigte Energie für das Sauggerät 10 durch eine Energieversorgung 81 mittels des zumindest einen Akkus 82 bereitgestellt. Der Akku 82 wird über ein Energieversorgungskoppelmittel 84 mit der Energieversorgung 81 verbunden.

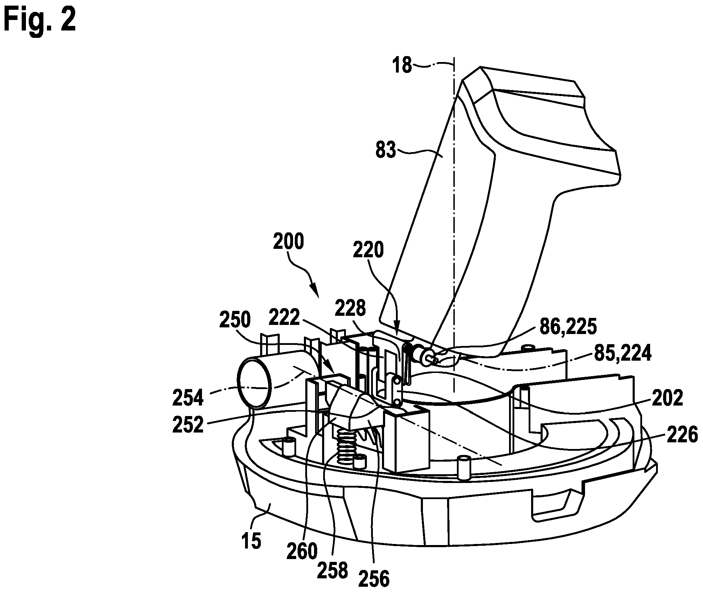

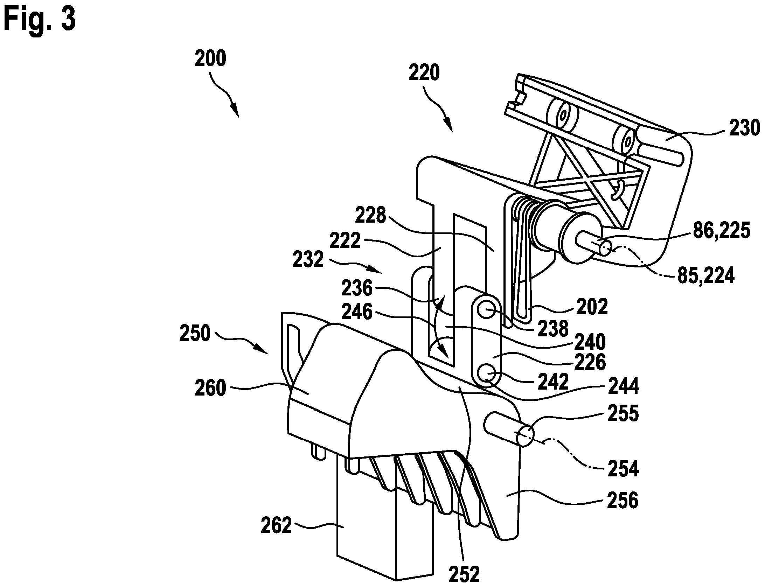

Das Gehäuseoberteil 13 und der Staubsammelbehälter 14 sind reversibel lösbar miteinander verbunden. In dieser Ausführungsform umfasst das Gehäuseoberteil 13 einen Elektromotor 80, eine Steuereinheit 60 zur Steuerung des Sauggeräts 10 und die Energieversorgung 81 zur Versorgung des Sauggeräts 10 mit elektrischer Energie. Weiter umfasst das Sauggerätgehäuse 12 eine Sauggerätachse 18. Hier ist das Sauggerätgehäuse 12 im Wesentlichen rotationssymmetrisch um die Sauggerätachse 18 ausgeformt, nach Art eines Hohlzylinders. Zudem weist das Sauggerätgehäuse 12 einen Deckel 83 für das Energieversorgungskoppelmittel 84 auf, siehe auch Fig. 2. Hierbei schließt der Deckel 83 formschlüssig mit dem Sauggerätgehäuse 12 ab, um zumindest einen Teil des Sauggerätgehäuses 12 zumindest teilweise zu verschließen. Der Deckel 83 umfasst ein nicht näher dargestelltes Verbindungselement, siehe auch Fig. 2 und 3.

Unter Verwendung von elektrischer Energie der Energieversorgung 81 treibt der Elektromotor 80 das Sauggerät 10 an. Sobald der Elektromotor 80 mit elektrischer Energie versorgt ist, erzeugt dieser einen Saugstrom im Wesentlichen durch das Sauggerätgehäuse 12, um Partikel und/oder Flüssigkeiten über den Saugschlauch 36 des Sauggeräts 10 einzusaugen.

Der Filter 16 filtert aus dem Saugstrom Stoff- und/oder Fluidpartikel und reinigt dabei den Saugstrom. Hier ist der Filter 16 innerhalb des Sauggerätgehäuses 12 angeordnet, wobei der Filter 16 an dem Gehäuseoberteil 13 angeordnet ist und in den Staubsammelbehälter 14 ragt.

Das Filterbefestigungselement 20 ist an dem Gehäuseoberteil 13 angeordnet. Das Filterbefestigungselement 20 ist hier zur unmittelbaren Befestigung des Filters 16 an dem Sauggerätgehäuse 12 ausgebildet. Der Filter 16 ist lösbar mit dem Gehäuseoberteil 13 verbunden.

Weiter umfasst das Sauggerät 10 die Filterreinigungsvorrichtung 200, wobei die Filterreinigungsvorrichtung 200 den Filter 16 mechanisch im Wesentlichen von Staubund/oder Schmutzpartikeln sowie von Flüssigkeiten reinigt. Hierbei ist die Filterreinigungsvorrichtung 200 innerhalb des Sauggerätgehäuses 12, an dem Gehäuseoberteil 13, angeordnet.

Fig. 2 zeigt eine perspektivische Ansicht einer Grundplatte 15 des Gehäuseoberteils 13 mit der Filterreinigungsvorrichtung 200. Hier umfasst die Filterreinigungsvorrichtung 200 eine manuell betätigbare Betätigungsvorrichtung 220 und eine Hammervorrichtung 250. Die Betätigungsvorrichtung 220 und die Hammervorrichtung 250 sind an der Grundplatte 15 angeordnet. Die Betätigungsvorrichtung 220 ist derart ausgebildet, dass die Betätigungsvorrichtung 220 die Hammervorrichtung 250 betätigt, sodass die Hammervorrichtung 250 einen Impuls auf das Filterbefestigungselement 20 ausübt. Die Hammervorrichtung 250 übt den Impuls axial zur Sauggerätachse 18 auf das Filterbefestigungselement 18 aus. Die Hammervorrichtung 250 übt den Impuls hier auf die Grundplatte 15 aus, wobei das Filterbefestigungselement 18 an der Grundplatte 15 von deren Unterseite her montiert ist (hier nicht näher dargestellt).

Wie oben beschrieben umfasst das Sauggerätgehäuse 12 als einen Bestandteil den Deckel 83 des Energieversorgungskoppelmittels 84. Das Energieversorgungskoppelmittel 84 ist hier nicht näher dargestellt. Der Deckel 83 ist von einer ersten Position des Deckels 83 in eine zweite Position des Deckels 83 um eine Deckelschwenkachse 85 schwenkbar. Die Fig. 2 zeigt den Deckel 83 in der ersten Position des Deckels 83, wohingegen die Fig. 1 den Deckel 83 in der zweiten Position des Deckels 83 zeigt. Der Deckel 83 betätigt bei einer Bewegung des Deckels 83 von der ersten Position des Deckels 83 in die zweite Position des Deckels 83 die Betätigungsvorrichtung 220. Hierbei ist der Deckel 83 um die Deckelschwenkachse 85, hier gebildet durch einen Stab 86, schwenkbar gelagert. In der ersten Position des Deckels 83 ist der Deckel 83 geöffnet. In der zweiten Position des Deckels 83 ist der Deckel 83 geschlossen. Hier ist die Deckelschwenkachse 85 quer, insbesondere senkrecht, zur Sauggerätachse 18 angeordnet. Das Gehäuseoberteil 13 umfasst eine nicht näher dargestellte Aufnahme zur Aufnahme der Deckelschwenkachse 85, wodurch die Deckelschwenkachse 85 und mittelbar der Deckel 83 schwenkbar gelagert am Gehäuseoberteil 13 befestigt sind. Der Deckel 83 ist zumindest formschlüssig mit der Betätigungsvorrichtung 220 verbunden. Hierdurch wandelt die Betätigungsvorrichtung 220 die Bewegung des Deckels 83 in die Betätigung der Filterreinigungsvorrichtung 200 um.

Die Filterreinigungsvorrichtung 200 umfasst ein Federelement 202, das den Deckel 83 von der zweiten Position des Deckels 83 in die erste Position des Deckels 83 schwenkt. Dabei ist das Federelement 202 in Umfangsrichtung um die Deckelschwenkachse 85 angeordnet und als eine Feder ausgebildet, siehe auch Fig. 3.

Die Betätigungsvorrichtung 220 umfasst ein Betätigungselement 222. Das Betätigungselement 222 ist hier nach Art eines Stegs ausgebildet. Das Betätigungselement 222 ist um eine Betätigungsachse 224 von einer ersten Position der Betätigungsvorrichtung 220 in eine zweite Position der Betätigungsvorrichtung 220 schwenkbar gelagert. Das Betätigungselement 222 betätigt die Hammervorrichtung 250, wenn die Betätigungsvorrichtung 220 von der ersten Position der Betätigungsvorrichtung 220 in die zweite Position der Betätigungsvorrichtung 220 schwenkt. Hier ist die Betätigungsachse 224 quer zur Sauggerätachse 18, insbesondere senkrecht zu dieser, angeordnet. Die Betätigungsachse 224 wird hier durch einen Stab 225 gebildet. Zudem sind hier die Deckelschwenkachse 85 und die Betätigungsachse 224 koaxial zueinander und durch denselben Stab 86, 225 realisiert. Wie bereits erwähnt, umfasst das Gehäuseoberteil 13 eine nicht näher dargestellte Aufnahme zur Aufnahme der Deckelschwenkachse 85 und damit auch zur Aufnahme der Betätigungsachse 224.

Die Betätigungsvorrichtung 220 umfasst ein Schwenkelement 226. Das Betätigungselement 222 weist ein Führungselement 228 auf. Zudem ist hier das Führungselement 228 einstückig mit dem Betätigungselement 222 ausgeformt. Das Führungselement 228 führt das Schwenkelement 226 beim Schwenken von einer ersten Position des Schwenkelements 226 in eine zweite Position des Schwenkelements 226. Das Schwenkelement 226 liegt hier derart abschnittsweise an dem Führungselement 228 an, dass es mitschwenkt. Das Schwenkelement 226 betätigt mit Hilfe des Betätigungselements 222 die Hammervorrichtung 250. Hier ist das Schwenkelement 226 schwenkbar um die Betätigungsachse 224 gelagert. In dieser Ausführungsform ist das Schwenkelement 226 an dem Betätigungselement 222 angeordnet, beispielsweise über ein Betätigungsgelenk 232. Hier weist das Schwenkelement 226 eine U-förmige Form auf. Weiter ist hier das Führungselement 228 als eine Führungsfläche ausgeformt.

Die Hammervorrichtung 250 umfasst ein Führungselement 252. Das Führungselement 252 der Hammervorrichtung 250 schwenkt die Hammervorrichtung 250 mit Hilfe der Betätigungsvorrichtung 220 von einer ersten Position der Hammervorrichtung 250 in eine zweite Position der Hammervorrichtung 250 um eine Hammervorrichtungsachse 254, siehe auch Fig. 3. Die Hammervorrichtungsachse 254 ist quer zur Sauggerätachse 18 angeordnet. Zudem ist die Hammervorrichtungsachse 254 im Wesentlichen parallel zur Betätigungsachse 224. Hier umfasst das Gehäuseoberteil 13 eine nicht näher dargestellte Aufnahme für die Hammervorrichtungsachse 254, sodass die Hammervorrichtung 250 schwenkbar gelagert, hier gebildet durch einen Stab 255, ist.

Die Hammervorrichtung 250 umfasst ein Hammergehäuse 256. Das Hammergehäuse 256 nimmt die Hammervorrichtungsachse 254 und das Führungselement 252 der Hammervorrichtung 250 auf, wobei das Führungselement 252 der Hammervorrichtung 250 einstückig mit dem Hammergehäuse 256 ist. Das Führungselement 252 der Hammervorrichtung ist hier als eine Führungsfläche ausgebildet. Hier gleitet das Schwenkelement 226 entlang des Führungselement 252 der Hammervorrichtung 250, sodass die Betätigungsvorrichtung 220 die Hammervorrichtung 250 betätigt.

Die Hammervorrichtung 250 umfasst ein Rückführelement 258. Hier ist das Rückführelement 258 zumindest abschnittsweise zwischen dem der Hammervorrichtung 250 und der Grundplatte 15 angeordnet. Das Rückführelement 258 führt die Hammervorrichtung 250 um die Hammervorrichtungsachse 254 aus der zweiten Position der Hammervorrichtung 250 in die erste Position der Hammervorrichtung 250 zurück. Hier liegt das Rückführelement 258 jeweils an der Hammervorrichtung 250 und an der Grundplatte 15 an. Das Rückführelement 258 der Hammervorrichtung 250 ist hier als eine Spiralfeder ausgebildet. Das Hammergehäuse 256 weist eine Aufnahme 260 für das Rückführelement 258 auf und nimmt dieses formschlüssig auf. Hier ist die Aufnahme 260 für das Rückführelement 258 und das Hammergehäuse 256 einstückig.

Fig. 3 zeigt eine perspektivische Ansicht der Filterreinigungsvorrichtung 200. Die Betätigungsvorrichtung 220 weist ein Aufnahmeelement 230 auf. Das Aufnahmeelement 230 verbindet die Betätigungsvorrichtung 220 mit dem Verbindungselement des Deckels 83. Das Aufnahmeelement 230 bildet eine formschlüssige Verbindung mit dem Verbindungselement aus. Das Aufnahmeelement 230 ist als schalenartige Aufnahme ausgeformt. Hier sind das Betätigungselement 222, das Führungselement 228 der Betätigungsvorrichtung 220 und das Aufnahmeelement 230 der Betätigungsvorrichtung 220 einstückig.

Die Betätigungsvorrichtung 220 umfasst das Betätigungsgelenk 232. Das Schwenkelement 226 ist hier über das Betätigungsgelenk 232 mit dem Betätigungselement 222 schwenkbar verbunden. Dabei umfasst das Betätigungselement 222 eine erste Aufnahme 234 und eine zweite Aufnahme 236. Die erste Aufnahme 234 des Betätigungselements 220 ist hier nicht näher dargestellt, wobei die erste Aufnahme 234 als eine Durchgangsöffnung für einen Stift ausgeformt ist. Die zweite Aufnahme 236 des Betätigungselements 220 nimmt das Schwenkelement 226 zumindest abschnittsweise auf. Hierzu greift das zweite Aufnahmeelement 236 des Betätigungselements 222 in das Schwenkelement 226 ein.

Hier umfasst das Schwenkelement 226 eine erste Aufnahme 238 und eine zweite Aufnahme 240. Dabei ist die erste Aufnahme 238 des Schwenkelements 226 als eine Aufnahme für einen Stift ausgeformt. Hier ist die erste Aufnahme 238 des Schwenkelements 226 als eine Durchgangsöffnung ausgebildet. In dieser Ausführungsform ist die zweite Aufnahme 240 des Schwenkelements 226 als eine Aussparung ausgeformt, die die zweite Aufnahme 236 des Betätigungselements 222 zumindest teilweise aufnimmt.

Das Betätigungsgelenk 232 wird unter Verwendung der ersten Aufnahme 238 des Schwenkelements 222, der ersten Aufnahme 234 des Betätigungselements 222 und zumindest eines nicht näher dargestellten Stifts ausgebildet. Der Stift verbindet die erste Aufnahme 238 des Schwenkelements 226 mit der ersten Aufnahme 234 des Betätigungselements.

Das Schwenkelement 226 umfasst ein Rückführelement 242. Das Rückführelement 242 führt das Schwenkelement 226 von einer zweiten Relativposition des Schwenkelements 226 in eine erste Relativposition des Schwenkelements 226 zurück. Hier ist das Rückführelement 242 formschlüssig mit dem Schwenkelement 226 verbunden. Dabei ist das Rückführelement 242 in einer Aufnahme 244 des Schwenkelements 226 aufgenommen ist. Das Rückführelement 242 ist in Form eines Stabs ausgeformt.

In dieser Ausführungsform ist das Schwenkelement 226 in der zweiten Relativposition des Schwenkelements 226 winklig zum Betätigungselement 222 angeordnet. Das Schwenkelement 226 weist hierbei einen Winkel 246 im Bereich von 1° bis 179° zum Betätigungselement auf. In der ersten Relativposition des Schwenkelements 226 ist das Schwenkelement 226 im Wesentlichen parallel zu dem Betätigungselement 222 angeordnet. Das Rückführelement 242 ermöglicht es, das Schwenkelement 226 aus der zweiten Relativposition des Schwenkelements 226 in die erste Relativposition des Schwenkelements 226 zu schwenken.

Die Hammervorrichtung 250 umfasst ein Hammerelement 262. Das Hammerelement 262 ist um die Hammervorrichtungsachse 254 schwenkbar gelagert. Das Hammerelement 262 überträgt den Impuls auf das Filterbefestigungselement 20, wenn die Hammervorrichtung 250 aus der zweiten Position der Hammervorrichtung 250 in die erste Position der Hammervorrichtung 250 geschwenkt wird. Hier nimmt das Hammergehäuse 256 das Hammerelement 262 formschlüssig auf. Das Hammerelement 262 ist hier in Form einer quaderförmigen Masse ausgeformt.

## Patentansprüche

1. Sauggerät (10) mit einem Sauggerätgehäuse (12), mit einem Filter (16) zur Reinigung eines Saugstroms, wobei das Sauggerätgehäuse (12) zumindest ein Filterbefestigungselement (20) zur zumindest mittelbaren Befestigung des Filters (16) an dem Sauggerätgehäuse (12) aufweist, und mit einer Filterreinigungsvorrichtung (200) zur mechanischen Reinigung des Filters (16), wobei der Filter (16), das Filterbefestigungselement (20) und die Filterreinigungsvorrichtung (200) zumindest teilweise innerhalb des Sauggerätgehäuses (12) angeordnet sind,
wobei
die Filterreinigungsvorrichtung (200) eine Betätigungsvorrichtung (220) und eine Hammervorrichtung (250) aufweist, wobei die Betätigungsvorrichtung (220) und die Hammervorrichtung (250) derart zusammenwirken, dass die Hammervorrichtung (250) unter Verwendung der Betätigungsvorrichtung (220) betätigbar ist und die Hammervorrichtung (250) bei einer Betätigung zumindest einen Impuls auf das Filterbefestigungselement (20) ausübt, **dadurch gekennzeichnet, dass** das Sauggerätgehäuse (12) zumindest einen Deckel (83), insbesondere einen Deckel (83) eines Energieversorgungskoppelmittels (84), aufweist, welcher bei der Bewegung, insbesondere Schwenkbewegung, von einer ersten Position des Deckels in eine zweite Position des Deckels die Filterreinigungsvorrichtung, insbesondere die Betätigungsvorrichtung, betätigt.

2. Sauggerät (10) nach Anspruch 1, **dadurch gekennzeichnet, dass** das Sauggerätgehäuse (12) zumindest einen Deckel (83), insbesondere einen Deckel (83) eines Energieversorgungskoppelmittels (84), aufweist, wobei der Deckel (83) von einer ersten Position des Deckels (83) in eine zweite Position des Deckels (83) um eine Deckelschwenkachse (85) schwenkbar ist und der Deckel (83) bei einer Bewegung von der ersten Position des Deckels (83) in die zweite Position des Deckels (83) die Filterreinigungsvorrichtung (200), insbesondere die Betätigungsvorrichtung (220), betätigt.

3. Sauggerät (10) nach Anspruch 2, **dadurch gekennzeichnet, dass** der Deckel (83) zumindest ein Aufnahmeelement aufweist und die Betätigungsvorrichtung (220) zumindest ein Verbindungselement umfasst und/oder der Deckel (83) zumindest ein Verbindungselement aufweist und die Betätigungsvorrichtung (220) zumindest ein Aufnahmeelement (230) umfasst, wobei das Aufnahmeelement (230) mit dem Verbindungselement verbindbar ist.

4. Sauggerät (10) nach einem der vorhergehenden Ansprüche, **dadurch gekennzeichnet, dass** die Betätigungsvorrichtung (220) zumindest ein Betätigungselement (222) aufweist, wobei das Betätigungselement (222) um eine Betätigungsachse (224) von einer ersten Position der Betätigungsvorrichtung (220) in eine zweite Position der Betätigungsvorrichtung (220) schwenkbar gelagert ist, und das Betätigungselement (222) beim Schwenken die Hammervorrichtung (250) betätigt.

5. Sauggerät (10) nach Anspruch 4, **dadurch gekennzeichnet, dass** die Betätigungsvorrichtung (220) zumindest ein Schwenkelement (226) aufweist und das Betätigungselement (222) zumindest ein Führungselement (228) umfasst, wobei das Führungselement (228) dazu ausgebildet ist, das Schwenkelement (226) beim Schwenken von einer ersten Position des Schwenkelements (226) in eine zweite Position des Schwenkelements (226) zu führen, insbesondere ausgerichtet zu halten, wobei das Schwenkelement (226) unter Verwendung des Betätigungselements (222) die Hammervorrichtung (250) betätigt.

6. Sauggerät (10) nach Anspruch 5, **dadurch gekennzeichnet, dass** das Schwenkelement (226) über zumindest ein Betätigungsgelenk (232) mit dem Betätigungselement (222) verbunden ist.

7. Sauggerät (10) nach Anspruch 5 oder 6, **dadurch gekennzeichnet, dass** das Schwenkelement (226) zumindest ein Rückführelement (242) aufweist, wobei das Rückführelement (242) dazu ausgebildet ist, das Schwenkelement (226) von einer zweiten Relativposition des Schwenkelements (226) in eine erste Relativposition des Schwenkelements (26) zurückzuführen.

8. Sauggerät (10) nach einem der vorhergehenden Ansprüche, **dadurch gekennzeichnet, dass** die Hammervorrichtung (250) zumindest ein Führungselement (252) aufweist, wobei das Führungselement (252) der Hammervorrichtung (250) mit der Betätigungsvorrichtung (220) derart zusammenwirkt, dass das Führungselement (252) unter Verwendung der Betätigungsvorrichtung (220) die Hammervorrichtung (250) von einer ersten Position der Hammervorrichtung (250) in eine zweite Position der Hammervorrichtung (250) um eine Hammervorrichtungsachse (254) schwenkt.

9. Sauggerät (10) nach Anspruch 8, **dadurch gekennzeichnet, dass** die Hammervorrichtung (250) zumindest ein Rückführelement (258) aufweist, wobei das Rückführelement (258) zumindest abschnittsweise zwischen der Hammervorrichtung (250) und dem Sauggerätgehäuse (12) angeordnet ist und das Rückführelement (258) die Hammervorrichtung (250) um die Hammervorrichtungsachse (254) aus der zweiten Position der Hammervorrichtung (250) in die erste Position der Hammervorrichtung (250) zurückführt.

10. Sauggerät (10) nach Anspruch 8 oder 9, **dadurch gekennzeichnet, dass** die Hammervorrichtung (250) zumindest ein Hammerelement (262) aufweist, das dazu ausgebildet ist, beim Schwenken der Hammervorrichtung (250) um die Hammervorrichtungsachse (254) aus der zweiten Position der Hammervorrichtung (250) in die erste Position der Hammervorrichtung (250) den Impuls auf das Filterbefestigungselement (20) zu übertragen.

## Claims

1. Suction device (10) having a suction device housing (12), having a filter (16) for cleaning a suction flow, wherein the suction device housing (12) has at least one filter securing element (20) for at least indirectly securing the filter (16) to the suction device housing (12), and having a filter cleaning apparatus (200) for mechanically cleaning the filter (16), wherein the filter (16), the filter securing element (20) and the filter cleaning apparatus (200) are arranged at least partially inside the suction device housing (12),
wherein
the filter cleaning apparatus (200) has an actuation apparatus (220) and a hammer apparatus (250), wherein the actuation apparatus (220) and the hammer apparatus (250) cooperate in such a manner that the hammer apparatus (250) can be actuated using the actuation apparatus (220) and the hammer apparatus (250) when actuated applies at least one pulse to the filter securing element (20), **characterized in that** the suction device housing (12) has at least one cover (83), in particular a cover (83) of an energy supply coupling means (84), which cover when moving, in particular pivoting, from a first position of the cover into a second position of the cover actuates the filter cleaning apparatus, in particular the actuation apparatus.

2. Suction device (10) according to Claim 1, **characterized in that** the suction device housing (12) has at least one cover (83), in particular a cover (83) of an energy supply coupling means (84), wherein the cover (83) can be pivoted from a first position of the cover (83) into a second position of the cover (83) about a cover pivot axis (85) and the cover (83) when moving from the first position of the cover (83) into the second position of the cover (83) actuates the filter cleaning apparatus (200), in particular the actuation apparatus (220).

3. Suction device (10) according to Claim 2, **characterized in that** the cover (83) has at least one receiving element and the actuation apparatus (220) comprises at least one connection element and/or the cover (83) has at least one connection element and the actuation apparatus (220) comprises at least one receiving element (230), wherein the receiving element (230) can be connected to the connection element.

4. Suction device (10) according to any one of the preceding claims, **characterized in that** the actuation apparatus (220) has at least one actuation element (222), wherein the actuation element (222) is supported so as to be able to be pivoted about an actuation axis (224) from a first position of the actuation apparatus (220) into a second position of the actuation apparatus (220), and the actuation element (222) actuates the hammer apparatus (250) during pivoting.

5. Suction device (10) according to Claim 4, **characterized in that** the actuation apparatus (220) has at least one pivot element (226) and the actuation element (222) comprises at least one guiding element (228), wherein the guiding element (228) is constructed to guide the pivot element (226) during pivoting from a first position of the pivot element (226) into a second position of the pivot element (226), in particular to keep it orientated, wherein the pivot element (226) actuates the hammer apparatus (250) using the actuation element (222).

6. Suction device (10) according to Claim 5, **characterized in that** the pivot element (226) is connected to the actuation element (222) by means of at least one actuation joint (232).

7. Suction device (10) according to Claim 5 or 6, **characterized in that** the pivot element (226) has at least one return element (242), wherein the return element (242) is constructed to return the pivot element (226) from a second relative position of the pivot element (226) into a first relative position of the pivot element (26).

8. Suction device (10) according to any one of the preceding claims, **characterized in that** the hammer apparatus (250) has at least one guiding element (252), wherein the guiding element (252) of the hammer apparatus (250) cooperates with the actuation apparatus (220) in such a manner that the guiding element (252) using the actuation apparatus (220) pivots the hammer apparatus (250) from a first position of the hammer apparatus (250) into a second position of the hammer apparatus (250) about a hammer apparatus axis (254).

9. Suction device (10) according to Claim 8, **characterized in that** the hammer apparatus (250) has at least one return element (258), wherein the return element (258) is at least partially arranged between the hammer apparatus (250) and the suction device housing (12) and the return element (258) returns the hammer apparatus (250) about the hammer apparatus axis (254) from the second position of the hammer apparatus (250) into the first position of the hammer apparatus (250).

10. Suction device (10) according to Claim 8 or 9, **characterized in that** the hammer apparatus (250) has at least one hammer element (262) which is constructed, when the hammer apparatus (250) is pivoted about the hammer apparatus axis (254) from the second position of the hammer apparatus (250) into the first position of the hammer apparatus (250), to transmit the pulse to the filter securing element (20).

## Revendications

1. Aspirateur (10) avec un boîtier d'aspirateur (12), avec un filtre (16) pour le nettoyage d'un courant d'aspiration, le boîtier d'aspirateur (12) présentant au moins un élément de fixation de filtre (20) pour la fixation au moins indirecte du filtre (16) sur le boîtier d'aspirateur (12), et avec un dispositif de nettoyage de filtre (200) pour le nettoyage mécanique du filtre (16), le filtre (16), l'élément de fixation de filtre (20) et le dispositif de nettoyage de filtre (200) étant agencés au moins partiellement à l'intérieur du boîtier d'aspirateur (12),
dans lequel
le dispositif de nettoyage de filtre (200) présente un dispositif d'actionnement (220) et un dispositif de marteau (250), le dispositif d'actionnement (220) et le dispositif de marteau (250) coopérant de telle sorte que le dispositif de marteau (250) peut être actionné en utilisant le dispositif d'actionnement (220) et le dispositif de marteau (250) exerce au moins une impulsion sur l'élément de fixation de filtre (20) lors d'un actionnement, **caractérisé en ce que** le boîtier d'appareil d'aspiration (12) présente au moins un couvercle (83), notamment un couvercle (83) d'un moyen de couplage d'alimentation en énergie (84), qui actionne le dispositif de nettoyage de filtre, notamment le dispositif d'actionnement, lors du mouvement, notamment du mouvement de pivotement, d'une première position du couvercle à une deuxième position du couvercle.

2. Aspirateur (10) selon la revendication 1, **caractérisé en ce que** le boîtier d'aspirateur (12) présente au moins un couvercle (83), notamment un couvercle (83) d'un moyen de couplage d'alimentation en énergie (84), le couvercle (83) pouvant pivoter autour d'un axe de pivotement de couvercle (85) d'une première position du couvercle (83) à une deuxième position du couvercle (83), et le couvercle (83) actionnant le dispositif de nettoyage de filtre (200), notamment le dispositif d'actionnement (220), lors d'un mouvement de la première position du couvercle (83) à la deuxième position du couvercle (83).

3. Aspirateur (10) selon la revendication 2, **caractérisé en ce que** le couvercle (83) présente au moins un élément de réception et le dispositif d'actionnement (220) comprend au moins un élément de liaison et/ou le couvercle (83) présente au moins un élément de liaison et le dispositif d'actionnement (220) comprend au moins un élément de réception (230), l'élément de réception (230) pouvant être relié à l'élément de liaison.

4. Aspirateur (10) selon l'une quelconque des revendications précédentes, **caractérisé en ce que** le dispositif d'actionnement (220) présente au moins un élément d'actionnement (222), l'élément d'actionnement (222) étant monté pivotant autour d'un axe d'actionnement (224) d'une première position du dispositif d'actionnement (220) à une deuxième position du dispositif d'actionnement (220), et l'élément d'actionnement (222) actionnant le dispositif de marteau (250) lors du pivotement.

5. Aspirateur (10) selon la revendication 4, **caractérisé en ce que** le dispositif d'actionnement (220) présente au moins un élément pivotant (226) et l'élément d'actionnement (222) comprend au moins un élément de guidage (228), l'élément de guidage (228) étant réalisé pour guider, notamment pour maintenir aligné, l'élément pivotant (226) lors du pivotement d'une première position de l'élément pivotant (226) à une deuxième position de l'élément pivotant (226), l'élément pivotant (226) actionnant le dispositif de marteau (250) en utilisant l'élément d'actionnement (222).

6. Aspirateur (10) selon la revendication 5, **caractérisé en ce que** l'élément pivotant (226) est relié à l'élément d'actionnement (222) par au moins une articulation d'actionnement (232).

7. Aspirateur (10) selon la revendication 5 ou 6, **caractérisé en ce que** l'élément pivotant (226) présente au moins un élément de retour (242), l'élément de retour (242) étant réalisé pour ramener l'élément pivotant (226) d'une deuxième position relative de l'élément pivotant (226) à une première position relative de l'élément pivotant (26).

8. Aspirateur (10) selon l'une quelconque des revendications précédentes, **caractérisé en ce que** le dispositif de marteau (250) présente au moins un élément de guidage (252), l'élément de guidage (252) du dispositif de marteau (250) coopérant avec le dispositif d'actionnement (220) de telle sorte que l'élément de guidage (252), en utilisant le dispositif d'actionnement (220), fait pivoter le dispositif de marteau (250) d'une première position du dispositif de marteau (250) à une deuxième position du dispositif de marteau (250) autour d'un axe de dispositif de marteau (254).

9. Aspirateur (10) selon la revendication 8, **caractérisé en ce que** le dispositif de marteau (250) présente au moins un élément de retour (258), l'élément de retour (258) étant agencé au moins par sections entre le dispositif de marteau (250) et le boîtier d'aspirateur (12), et l'élément de retour (258) ramenant le dispositif de marteau (250) autour de l'axe de dispositif de marteau (254) de la deuxième position du dispositif de marteau (250) à la première position du dispositif de marteau (250).

10. Aspirateur (10) selon la revendication 8 ou 9, **caractérisé en ce que** le dispositif de marteau (250) présente au moins un élément de marteau (262) réalisé pour transmettre l'impulsion à l'élément de fixation de filtre (20) lors du pivotement du dispositif de marteau (250) autour de l'axe de dispositif de marteau (254) de la deuxième position du dispositif de marteau (250) à la première position du dispositif de marteau (250).
